# EUROPEAN PATENT APPLICATION

(11) **EP 4 529 205 A1**
(43) Date of publication of application: **26.03.2025**
(21) Application number: 23909328.9
(22) Date of filing: 08.09.2023
(51) Int. Cl.: H04N 23/67, H04N 23/80

(54) **FOCUSING METHOD AND ELECTRONIC DEVICE**

(30) Priority: 30.12.2022 CN 202211729785
(71) Applicant: Honor Device Co., Ltd., Shenzhen, Guangdong 518040 (CN)
(72) Inventor: WEN, Yang, Shenzhen, Guangdong 518040 (CN); ZHANG, Yifan, Shenzhen, Guangdong 518040 (CN); ZHANG, Huidi, Shenzhen, Guangdong 518040 (CN)
(74) Representative: Isarpatent
(86) International application number: PCT/CN2023/117708
(87) International publication number: WO 2024/139390

(57) **Abstract**

A focusing method and an electronic device are provided, which relate to the field of camera technologies. In response to a first event, where the first event is used to trigger focusing, if it is determined that an image sensor is not being exposed, a motor is driven to move, to change a distance between a lens and the image sensor for focusing. In response to the first event, if it is determined that the image sensor is being exposed, the motor is driven to move after the exposure of the image sensor ends, to change the distance between the lens and the image sensor for focusing. Therefore, the motor can be controlled to change the distance between the lens and the image sensor only during a non-exposure period, to implement focusing and ensure sharpness of a photographed image.

## Description

This application claims priority to Chinese Patent Application No. 202211729785.7, filed with the China National Intellectual Property Administration on December 30, 2022 and entitled "FOCUSING METHOD AND ELECTRONIC DEVICE", which is incorporated herein by reference in its entirety.

### TECHNICAL FIELD

This application relates to the field of camera technologies, and in particular, to a focusing method and an electronic device.

### BACKGROUND

Electronic devices such as a mobile phone, a tablet, and a camera are generally provided with a photographing function of pictures or videos.

However, in a process of implementing embodiments of this application, the inventor found that an existing photographing function often causes a problem of blurring of a photographed image, and therefore a photographing effect is poor.

### SUMMARY

In view of this, this application provides a focusing method and an electronic device. A motor moves only during a non-exposure period, and focuses by changing a distance between a lens and an image sensor, to ensure sharpness of a photographed image.

According to a first aspect, this application provides a focusing method, applied to an electronic device including a lens, an image sensor, and a motor. For example, the electronic device may be a mobile phone, a tablet, or a camera. The lens is configured to transmit light of a photographed object to the image sensor, the image sensor is configured to convert a light signal corresponding to the light into an electrical signal for exposure, and the motor is configured to drive the lens to move for focusing. In response to a first event, where the first event is used to indicate focusing, if it is determined that the image sensor is not being exposed, the motor is driven to move, to change a distance between the lens and the image sensor for focusing. In response to the first event, if it is determined that the image sensor is being exposed, the motor is driven to move after the exposure of the image sensor ends, to change the distance between the lens and the image sensor for focusing.

In summary, according to the solution of this application, even if focusing is triggered, the electronic device does not drive the motor to implement focusing during a period in which the image sensor is being exposed to. Instead, the motor is driven to implement focusing only during a period in which the image sensor is not being exposed (that is, during a non-exposure period). In this way, sharpness of a photographed image can be ensured.

In a possible design of the first aspect, the first event includes that sharpness of a photographed image is lower than a sharpness threshold, or a focus request of a user is received.

In another possible design of the first aspect, if a level of a first pin of the image sensor is a first level (an exposure pin), it is determined that the image sensor is being exposed; and if the level of the first pin of the image sensor is a second level, it is determined that the image sensor is not being exposed.

In other words, whether the image sensor is being exposed may be detected based on the level of the first pin of the image sensor, to implement accurate distinction between an exposure period and a non-exposure period.

In another possible design of the first aspect, the electronic device further includes a processor and a first focus chip, the first focus chip is configured to drive the motor to move, the processor is connected to the first focus chip, and the processor is connected to the first pin of the image sensor. Because the processor is connected to the first pin of the image sensor, the processor can timely and accurately detect whether the image sensor is being exposed.

In this design, that if it is determined that the image sensor is not being exposed, the motor is driven to move includes: If the processor detects that the level of the first pin is the second level, the processor sends a focus signal to the first focus chip. The focus signal is used to trigger focusing. In response to the focus signal, the first focus chip drives the motor to move.

And that if it is determined that the image sensor is being exposed, the motor is driven to move after the exposure of the image sensor ends includes: If the processor detects that the level of the first pin is the first level, after the processor detects that the level of the first pin changes to the second level, the motor is driven to move.

In other words, in this design, the first focus chip receives the focus signal transmitted by the processor only during the non-exposure period, and after receiving the focus signal, the first focus chip may drive the motor to move. In this way, it can be ensured that the motor is driven to move during the non-exposure period to implement focusing.

In another possible design of the first aspect, the electronic device further includes a processor and a second focus chip, the second focus chip is configured to store a focus signal and drive the motor to move, the focus signal is used to trigger focusing, the second focus chip is connected to the motor and the processor, and the second focus chip is connected to the first pin of the image sensor. Because the second focus chip is connected to the first pin of the image sensor, the second focus chip can timely and accurately detect whether the image sensor is being exposed.

In this design, that in response to a first event, if it is determined that the image sensor is not being exposed, the motor is driven to move, and in response to the first event, if it is determined that the image sensor is being exposed, the motor is driven to move after the exposure of the image sensor ends includes: In response to the first event, the processor sends the focus signal to the second focus chip. The second focus chip stores the focus signal. In other words, regardless of whether the image sensor is being exposed, after focusing is triggered, the processor sends the focus signal to the second focus chip.

In addition, if the second focus chip detects that the level of the first pin is the second level, the second focus chip drives, based on the stored focus signal, the motor to move. If the second focus chip detects that the level of the first pin is the first level, after detecting that the level of the first pin changes to the second level, the second focus chip drives the motor to move.

In other words, in this design, after receiving the focus signal, the second focus chip may drive the motor to move only during the non-exposure period. In this way, it can be ensured that the motor is driven to move during the non-exposure period to implement focusing.

In another possible design of the first aspect, the electronic device further includes a processor, a first focus chip, and a switch module, the switch module is configured to store and control transmission of a focus signal, the focus signal is used to trigger focusing, the first focus chip is configured to drive the motor to move, the switch module is connected to the first focus chip and the processor, and the switch module is connected to the first pin of the image sensor. Because the switch module is connected to the first pin of the image sensor, the switch module can timely and accurately detect whether the image sensor is being exposed.

In this design, that in response to a first event, if it is determined that the image sensor is not being exposed, the motor is driven to move, and in response to the first event, if it is determined that the image sensor is being exposed, the motor is driven to move after the exposure of the image sensor ends includes: In response to the first event, the processor sends the focus signal to the switch module. The switch module stores the focus signal. In other words, regardless of whether the image sensor is being exposed, after focusing is triggered, the processor sends the focus signal to the switch module.

In addition, if the switch module detects that the level of the first pin is the second level, the switch module sends the focus signal stored by the switch module to the first focus chip. If the switch module detects that the level of the first pin is the first level, after detecting that the level of the first pin changes to the second level, the switch module sends the focus signal stored by the switch module to the first focus chip. In response to the focus signal, the first focus chip drives the motor to move.

In other words, in this design, after receiving the focus signal, the switch module may send the focus signal to the first focus chip only during the non-exposure period. After receiving the focus signal, the first focus chip may drive the motor to move. In this way, it can be ensured that the motor is driven to move during the non-exposure period to implement focusing.

In another possible design of the first aspect, that the motor is driven to move includes: driving the motor to move in a first direction. The first direction is a direction that is along an optical axis of the lens and close to the image sensor, so that the distance between the lens and the image sensor becomes shorter. Alternatively, the first direction is a direction that is along an optical axis of the lens and away from the image sensor, so that the distance between the lens and the image sensor becomes longer.

According to a second aspect, this application further provides an electronic device. The electronic device includes a lens, an image sensor, a motor, a processor, and a memory, the lens is configured to transmit light of a photographed object to the image sensor, the image sensor is configured to convert a light signal corresponding to the light into an electrical signal for exposure, the motor is configured to drive the lens to move for focusing, and the memory stores computer instructions. When the processor executes the computer instructions, the electronic device is enabled to perform the following steps.

In response to a first event, where the first event is used to indicate focusing, if it is determined that the image sensor is not being exposed, the motor is driven to move, to change a distance between the lens and the image sensor for focusing. In response to the first event, if it is determined that the image sensor is being exposed, the motor is driven to move after the exposure of the image sensor ends, to change the distance between the lens and the image sensor for focusing.

In a possible design of the second aspect, the first event includes that sharpness of a historically captured image is lower than a sharpness threshold, or a focus request of a user is received.

In a possible design of the second aspect, if a level of a first pin of the image sensor is a first level, the image sensor is being exposed; and if the level of the first pin of the image sensor is a second level, the image sensor is not being exposed.

In a possible design of the second aspect, the electronic device further includes a processor and a first focus chip, the first focus chip is configured to drive the motor to move, the processor is connected to the first focus chip, and the processor is connected to the first pin of the image sensor.

When the processor executes the computer instructions, the electronic device is further enabled to perform the following steps.

If the processor detects that the level of the first pin is the second level, the processor sends a focus signal to the first focus chip, where the focus signal is used to trigger focusing.

In response to the focus signal, the first focus chip drives the motor to move.

If the processor detects that the level of the first pin is the first level, after the processor detects that the level of the first pin changes to the second level, the motor is driven to move.

In a possible design of the second aspect, the electronic device further includes a processor and a second focus chip, the second focus chip is configured to store a focus signal and drive the motor to move, the focus signal is used to trigger focusing, the second focus chip is connected to the motor and the processor, and the second focus chip is connected to the first pin of the image sensor.

When the processor executes the computer instructions, the electronic device is further enabled to perform the following steps. In response to the first event, the processor sends the focus signal to the second focus chip. The second focus chip stores the focus signal. If the second focus chip detects that the level of the first pin is the second level, the second focus chip drives, based on the stored focus signal, the motor to move. If the second focus chip detects that the level of the first pin is the first level, after detecting that the level of the first pin changes to the second level, the second focus chip drives the motor to move.

In a possible design of the second aspect, the electronic device further includes a processor, a first focus chip, and a switch module, the switch module is configured to store and control transmission of a focus signal, the focus signal is used to trigger focusing, the first focus chip is configured to drive the motor to move, the switch module is connected to the first focus chip and the processor, and the switch module is connected to the first pin of the image sensor.

When the processor executes the computer instructions, the electronic device is further enabled to perform the following steps. In response to the first event, the processor sends the focus signal to the switch module. The switch module stores the focus signal. If the switch module detects that the level of the first pin is the second level, the switch module sends the focus signal stored by the switch module to the first focus chip. If the switch module detects that the level of the first pin is the first level, after detecting that the level of the first pin changes to the second level, the switch module sends the focus signal stored by the switch module to the first focus chip. In response to the focus signal, the first focus chip drives the motor to move.

In a possible design of the second aspect, when the processor executes the computer instructions, the electronic device is further enabled to perform the following step: driving the motor to move in a first direction. The first direction that is along an optical axis of the lens and close to the image sensor. Alternatively, the first direction is a direction that is along an optical axis of the lens and away from the image sensor.

According to a third aspect, this application further provides a chip system. The chip system includes an interface circuit and a processor; the interface circuit and the processor are interconnected through a line; the interface circuit is configured to: receive a signal from a memory, and send the signal to the processor; the signal includes computer instructions stored in the memory; and when the processor executes the computer instructions, the chip system performs the method according to any one of the first aspect and the possible designs.

According to a fourth aspect, this application further provides a computer-readable storage medium. The computer-readable storage medium includes computer instructions; and when the computer instructions are run, the method according to any one of the first aspect and the possible designs is performed.

According to a fifth aspect, this application further provides a computer program product. The computer program product includes an instruction; and when the computer program product runs on a computer, the computer is enabled to perform the method according to any one of the first aspect and the possible designs.

It may be understood that, for beneficial effects that can be achieved by the electronic device according to the second aspect, the chip system according to the third aspect, the computer storage medium according to the fourth aspect, and the computer program product according to the fifth aspect, refer to the beneficial effects according to any one of the first aspect and the possible designs thereof. Details are not described herein again.

### BRIEF DESCRIPTION OF DRAWINGS

FIG. 1 is a diagram of positions of component structures of a camera module according to an embodiment of this application;
FIG. 2 is a principle diagram of focusing according to an embodiment of this application;
FIG. 3 is a sequence chart 1 of focusing and exposure according to an embodiment of this application;
FIG. 4 is a sequence chart 2 of focusing and exposure according to an embodiment of this application;
FIG. 5 is a diagram of a hardware structure of an electronic device according to an embodiment of this application;
FIG. 6 is a flowchart 1 of a focusing method according to an embodiment of this application;
FIG. 7 is a diagram 1 of a mobile phone interface according to an embodiment of this application;
FIG. 8 is a diagram 2 of a mobile phone interface according to an embodiment of this application;
FIG. 9 is a diagram 1 of a connection relationship of hardware for implementing focusing according to an embodiment of this application;
FIG. 10 is a diagram 1 of interaction of hardware for implementing focusing according to an embodiment of this application;
FIG. 11 is a sequence chart 3 of focusing and exposure according to an embodiment of this application;
FIG. 12 is a flowchart 2 of a focusing method according to an embodiment of this application;
FIG. 13 is a diagram 2 of a connection relationship of hardware for implementing focusing according to an embodiment of this application;
FIG. 14 is a diagram 2 of interaction of hardware for implementing focusing according to an embodiment of this application;
FIG. 15 is a sequence chart 4 of focusing and exposure according to an embodiment of this application;
FIG. 16 is a diagram 3 of a connection relationship of hardware for implementing focusing an embodiment of this application;
FIG. 17 is a diagram 3 of interaction of hardware for implementing focusing according to an embodiment of this application;
FIG. 18 is a sequence chart 5 of focusing and exposure according to an embodiment of this application; and
FIG. 19 is a diagram of a component structure of a chip system according to an embodiment of this application.

### DESCRIPTION OF EMBODIMENTS

Embodiments of this application are described in detail below, and examples of the embodiments are shown in the accompanying drawings, where the same or similar elements or the elements having same or similar functions are denoted by the same or similar reference numerals throughout the description. The embodiments described below with reference to the accompanying drawings are examples, and are intended to explain this application, but shall not be understood as a limitation to this application.

In the description of this application, it should be understood that orientation or position relationships indicated by the terms such as inside" and "outside" are based on orientation or position relationships shown in the accompanying drawings, and are used only for ease of describing this application and simplifying description, rather than indicating or implying that a mentioned apparatus or element needs to have a particular orientation or needs to be constructed and operated in a specific orientation. Therefore, such terms shall not be construed as limitation to this application.

For ease of describing the technical solutions in embodiments of this application clearly, in the embodiments of this application, words such as "first" and "second" are used to distinguish same or similar items with a basically same function and role. For example, a first limiting part and a second limiting part are merely used to distinguish between different limiting parts, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, the expression such as "in an embodiment" or "for example" is used to represent giving an example, an illustration, or a description. Any embodiment or design scheme described as "in an embodiment " or "for example" in this application should not be explained as being more preferable or more advantageous than another embodiment or design scheme. Exactly, use of the expression, such as "in an embodiment" or "for example", is intended to present a related concept in a specific manner.

In this application, unless otherwise explicitly specified or defined, the terms such as "connect" and "connection" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in this application according to specific situations.

To make the objectives, technical solutions, and advantages of this application clearer, the following further describes this application in detail with reference to the accompanying drawings and embodiments.

A focusing method provided in embodiments of this application may be applied to an electronic device having a camera function, that is, to an electronic device that can perform photographing (including photographing a picture or a video).

For example, the electronic device may include a smart phone (smart phone), a personal digital assistant (personal digital assistant, PDA) computer, a tablet computer, a handheld computer, a laptop computer (laptop computer), a video camera, a video recorder, a still camera, a smartwatch (smartwatch), a smart wristband (smart wristband), a cellular phone, an in-vehicle computer, and another electronic device having a camera function. A specific form of the electronic device is not specially limited in embodiments of this application.

During photographing of the electronic device, the electronic device may generally improve photographing performance through processing such as automatic focus (Automatic Focus, AF) and automatic exposure (Automatic Exposure, AE).

Automatic focus is a process of using a principle of light reflection of a photographed object to receive light reflected by the photographed object through an image sensor, and adjusting, through calculation processing, a distance between a lens and the image sensor, to move an imaging focus of the photographed object to the image sensor to implement clear imaging. That is, through automatic focus, sharpness of an image can be ensured.

A focus motor may be used to drive the lens to move to adjust the distance between the lens and the image sensor. It should be understood that an entirety of the focus motor, the lens, and the image sensor is generally referred to as a camera module.

An example is used in which the focus motor is a voice coil motor (Voice Coil Motor, VCM). The voice coil motor includes a moving part and a stationary part. A lens is fixed to the moving part, and the moving part can move relative to the stationary part in a direction of an optical axis. The image sensor is fixed to a side that is of the voice coil motor and that is away from the lens. The lens may move with the moving part, so that an imaging focus of the lens on the photographed object is located on the image sensor. In this way, the photographed object can be clearly imaged.

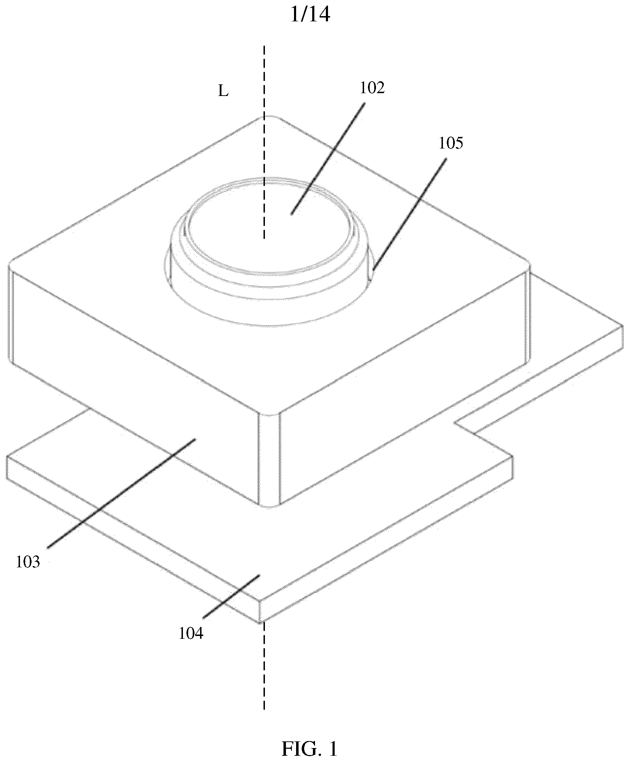

FIG. 1 is a diagram of a position relationship between a voice coil motor, a lens, and an image sensor in a camera module. As shown in FIG. 1, the voice coil motor 103 and the lens 102 may be disposed on a daylighting side of the image sensor 104. A lens port 105 may be disposed on the voice coil motor 103. The lens 102 is located in the lens port 105, and a light exit side of the lens 102 corresponds to a position of the daylighting side of the image sensor 104. The lens 102 can collect light of a photographed object, and the voice coil motor 103 can drive the lens 102 to move along an optical axis L of the lens 102 to move an imaging focus of the photographed object to the image sensor 104, so that clear imaging can be implemented.

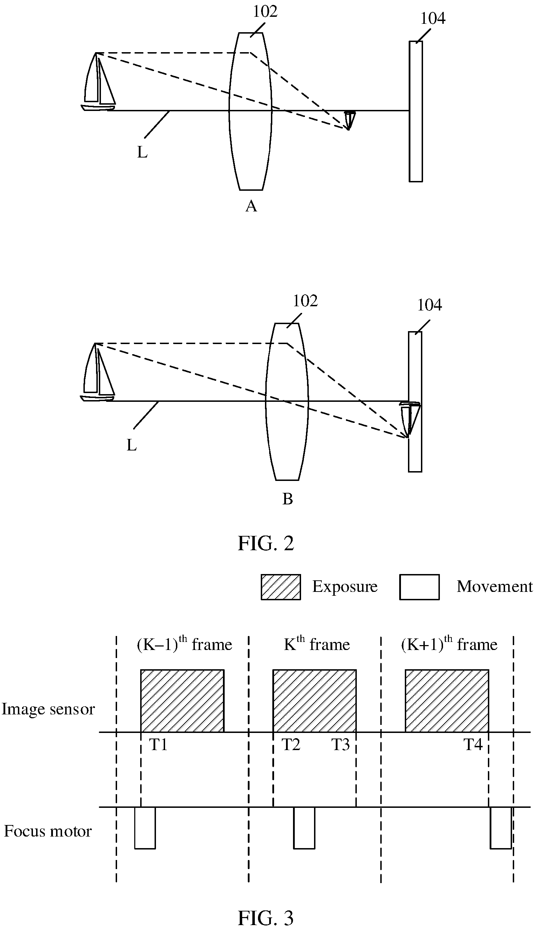

For example, refer to FIG. 2. When the lens 102 is located at a position A to photograph a "sailboat", an imaging focus of the "sailboat" does not fall on the image sensor 104. In this case, the photographed "sailboat" is unclear. Still refer to FIG. 2. The voice coil motor 103 drives the lens 102 to move along the optical axis L and in a direction closer to the image sensor 104. When the lens 102 moves to a B position, the imaging focus of the "sailboat" just falls on the image sensor 104. In this case, the photographed "sailboat" is clear.

It should be noted that, in this specification, the focus motor is mainly used for description to move the lens and change a distance between the lens and the image sensor for focusing. However, during actual implementation, this is not limited. For example, the image sensor may alternatively be driven to move by a motor to change the distance between the lens and the image sensor for focusing.

In addition, automatic exposure is a process of performing brightness statistics on an image after the image is photographed, determining an exposure value of the image, further calculating exposure parameters such as an exposure time and a gain (ISO) for photographing a new image, and then controlling image sensor exposure based on the exposure parameters, to obtain a new image with appropriate brightness through photographing. That is, through automatic exposure, it can be ensured that the overall brightness of the image is not excessively dark or excessively light.

In some embodiments, in a photographing process of the electronic device, a sequence between exposure of the image sensor 104 and movement of the lens 102 by the voice coil motor 103 is not mutually constrained. In other words, a sequence relationship between the exposure of the image sensor 104 and the movement of the lens 102 driven by the voice coil motor 103 includes at least one or more of the following cases: Before the image sensor 104 is exposed, the voice coil motor 103 moves the lens 102. During the exposure of the image sensor 104, the voice coil motor 103 drives the lens 102 to move. In addition, after the exposure of the image sensor 104 ends, the voice coil motor 103 drives the lens 102 to move.

For example, refer to FIG. 3. When a (k-1)^{th} frame of image, a k^{th} frame of image, and a (k+1)^{th} frame of image each are photographed, the image sensor 104 is exposed once. When the (k-1)^{th} frame of image is photographed, before and during the exposure of the image sensor 104, for example, before and after t1, the focus motor (for example, the voice coil motor 103) moves, to drive the lens 102 to move to implement focusing. When the k^{th} frame of image is photographed, during the exposure of the image sensor 104, for example, in a period t2-t3, the focus motor (for example, the voice coil motor 103) moves, to drive the lens 102 to move to implement focusing. When the (k+1)^{th} frame of image is photographed, after the exposure of the image sensor 104 ends, for example, after t4, the focus motor (for example, the voice coil motor 103) moves, to drive the lens 102 to move to implement focusing.

However, if the voice coil motor 103 drives the lens 102 to move during the exposure of the image sensor 104, a photographed image is blurred. For example, in the foregoing example of FIG. 3, both the photographed (k-1)^{th} frame of image and the k^{th} frame of image are blurred.

Based on the foregoing problems, embodiments of this application provide a focusing method, which may be applied to a scenario in which the electronic device performs photographing (including photographing a picture or a video). The electronic device may control the focus motor to move when the image sensor is not being exposed (including before the exposure and after the exposure ends), to drive the lens to move. When the image sensor is being exposed, the focus motor is not controlled to move, so that the lens is not driven to move. In this way, a problem of image blur caused by movement of the focus motor during exposure can be avoided, and sharpness of a photographed image can be ensured.

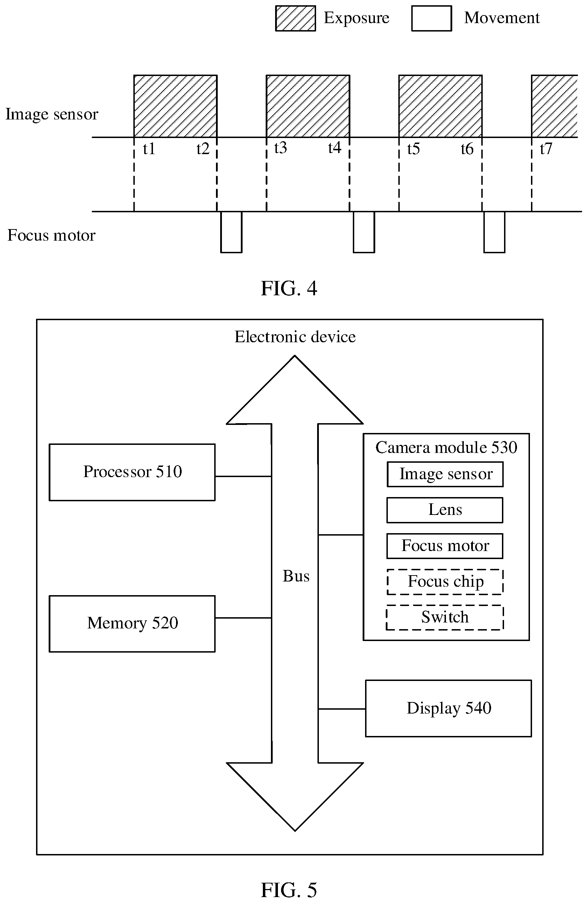

For example, refer to FIG. 4. The image sensor is being exposed in time periods t1-t2, t3-t4, and t5-t6, and is not being exposed in time periods t2-t3, t4-t5, and t6-t7. Then, the electronic device may control the focus motor to move in periods t2-t3, t4-t5, and t6-t7, to drive the lens to move. During the periods t1-t2, t3-t4, and t5-t6, the focus motor is not controlled to move, so that the lens is not driven to move.

FIG. 5 is a diagram of a hardware structure of an electronic device according to an embodiment of this application; As shown in FIG. 5, for example, the electronic device is a mobile phone. The electronic device may include: a processor 510, a memory 520, a camera module 530, and a display 540. The processor 510, the memory 520, the camera module 530, and the display 540 may be connected through a bus (for example, an IIC bus).

The processor 510 may include one or more processing units. For example, the processor 510 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The processor 510 may be a nerve center and a command center of the electronic device. The processor 510 may generate an operation control signal based on an instruction operation code and a sequence signal to control instruction reading and instruction executing.

A memory may be further disposed in the processor 510 to store instructions and data. In some embodiments, the memory in the processor 510 is a cache. The memory may store instructions or data that is just used or cyclically used by the processor 510. If the processor 510 needs to use the instructions or the data again, the processor may directly invoke the instructions or the data from the memory. This avoids repeated access and reduces a waiting time of the processor 510, thereby improving system efficiency.

The memory 520 is coupled to the processor 510, and is configured to store various software programs and/or a plurality of groups of instructions. The memory 520 may be configured to store a computer executable program code, where the executable program code comprises an instruction. The processor 510 runs the instructions stored in the memory 520, to perform various function applications and data processing of the electronic device. The memory 520 may comprise a program storage area and a data storage area. The program storage area may store an operating system, an application required by at least one function (such as a sound playing function and an image display function), and the like. The data storage area may store data (for example, audio data and to-be-displayed image data) created during use of the electronic device. In addition, the memory 520 may include a high-speed random access memory, or may include a non-volatile memory, for example, at least one magnetic disk storage, a flash memory, or a universal flash storage (universal flash storage, UFS).

The electronic module 530 may be used in the electronic device to implement an image photographing function by using the image signal processor (Image Signal Processor, ISP), the video codec, the GPU, the display 540, the application processor, and the like. It should be noted that, as described above, the camera module 530 may specifically include a focus motor, a lens, and an image sensor.

The ISP is configured to process data fed back by the camera module 530. For example, during photographing, a shutter is enabled. Light is transferred to the image sensor of the camera module 530 through the lens, and an optical signal is converted into an electrical signal. The image sensor transfers the electrical signal to the ISP for processing, to convert the electrical signal into a visible image. The ISP may further perform algorithm optimization on noise, brightness, and complexion of the image.

The ISP may optimize an exposure parameter and a focus parameter in a photographing scenario, to implement automatic exposure and automatic focus. For example, the ISP may use an 3A algorithm to complete determining the exposure parameter and the focus parameter. Herein, 3A includes automatic focus, automatic exposure, and automatic white balance. Regarding the 3A algorithm, details are not described herein again. In addition, the focus parameter determined by the ISP may be sent to a driver (such as a focus chip) to drive the motor to move. The exposure parameter determined by the ISP may be sent to the driver through a bus, to drive components such as the image sensor and the shutter to implement exposure.

Each camera module 530 may have a corresponding ISP (or ISP module), to complete image processing corresponding to the camera module 530. In addition, the ISP and the corresponding camera module 530 may be separately disposed, for example, integrated into the processor 510. Alternatively, the ISP may be disposed in the corresponding camera module 530. This is not specifically limited in this embodiment of this application.

The camera module 530 drives the lens to move by using the focus motor to complete focusing, and the image sensor receives light projected by the lens to complete exposure.

When the lens is disposed on the front of the electronic device, the lens may be configured to photograph a scene on a side of the front of the electronic device. When the lens is disposed on the back of the electronic device, the lens may be configured to photograph a scene on a side of the back of the electronic device. During photographing, a user may select a corresponding lens based on a photographing need.

It should be understood that, when the lens is disposed on the front of the electronic device, the lens may be mounted at any position on the front of the electronic device other than the display 540, for example, a left side of an earpiece, an upper middle of the electronic device, a lower part (or referred to as a chin) of the electronic device, or four corners of the electronic device. In fact, for a full-screen mobile phone, a lens may also be located below the display 540. When the lens is disposed on the back of the electronic device, the lens may be mounted at any position on the back of the electronic device, for example, an upper left corner or an upper right corner. In some other embodiments, the lens may alternatively be disposed not on the body of the electronic device, but on an edge that protrudes relative to the body of the electronic device, or on a part that is movable or rotatable relative to the electronic device. The part may be extended or rotated from the body of the electronic device.

The focus motor may be a voice coil motor, a piezoelectric motor, a shape memory alloy (shape memory alloy, SMA), or the like. This is not specifically limited in this embodiment of this application.

The image sensor (also referred to as a photosensitive element) is configured to capture a static image or a video. An optical image of a photographed object is generated through the lens and is projected to the image sensor. The image sensor may be a charge coupled device (charge coupled device, CCD) or a complementary metal-oxide-semiconductor (complementary metal-oxide-semiconductor, CMOS) phototransistor. The image sensor converts an optical signal into an electrical signal, and then transmits the electrical signal to the ISP to convert the electrical signal into a digital image signal, for example, an image signal in a format of standard RGB, YUV, or the like.

In addition, the image sensor includes an exposure pin (Pin) (which may also be referred to as a first pin). In a process in which the image sensor is being exposed, a level of the exposure pin is a first level, for example, a high level. In a process in which the image sensor is not being exposed, a level of the exposure pin is a second level, for example, a low level.

A quantity of camera modules 530 disposed in this embodiment of this application is not limited, and may be one, two, three, four or more. For example, one or more camera modules may be disposed on the front surface of the electronic device and/or one or more camera modules may be disposed on the back surface of the electronic device. When a plurality of camera modules 530 are disposed, the plurality of camera modules 530 may be the same or different. For example, lens optical parameters of the plurality of camera modules 530 are different, lens setting positions are different, lens forms are different, and the like. For example, the plurality of camera modules 530 may include a module of cameras such as a periscope telephoto camera, a main camera, a wide-angle camera, and the like.

The display 540 may be configured to display an image, a video, an interface, and the like. In this embodiment of this application, the display 540 is configured to display interfaces output by a system of the electronic device 100. For details, refer to related descriptions of the following embodiments. The display 540 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light-emitting diode, QLED), or the like.

It may be understood that the structure shown in this embodiment of this application does not constitute a specific limitation on the electronic device. In some other possible embodiments of this application, the electronic device may include more or fewer components than those shown in the figure, or some components may be combined, or some components may be split, or components are arranged in different manners. The specific details can be determined based on an actual application scenario and are not limited here.

In some embodiments, still as shown in FIG. 5, the camera module 530 of the electronic device may further include a focus chip. The focus chip stores a driver program, configured to drive the focus motor to operate.

In a specific implementation, the focus chip may further store a focus signal, and drive the focus motor to operate based on the focus signal at an appropriate occasion (for example, when the image sensor is not being exposed). The focus signal is used to trigger focusing.

In another specific implementation, in addition to including the focus chip, the camera module 530 of the electronic device may further include a switch module of the focus chip. The switch module may be configured to store the focus signal, and send the focus signal to the focus chip at an appropriate occasion (for example, when the image sensor is not being exposed), to drive the focus motor to operate.

For ease of description, a focus chip that stores a driver program but does not store a focus signal may be referred to as a first focus chip, and a focus chip that can store a focus signal may be referred to as a second focus chip. In addition, a component that stores the focus signal, such as the second focus chip or the switch module, may be referred to as a focus storage component.

The components shown in FIG. 5 may be implemented by hardware, software, or a combination of software and hardware. This is not specifically limited in this embodiment of this application.

The focusing method provided in embodiments of this application may be implemented in an electronic device having the foregoing hardware structure.

In this application, the following two manners of controlling the focus motor to move during a period during which the image sensor is not being exposed, that is, during a non-exposure period, are provided.

Manner 1: In a case that there is a focusing need, transmit a focus signal to the first focus chip during the non-exposure period. The focus signal is used to trigger focusing. After receiving the focus signal, the first focus chip may drive the focus motor to move. In a case that there is a focusing need, but during an exposure period, a focus signal is not transmitted to the first focus chip, so that the focus motor is not driven to move.

In the manner 1, by transmitting the focus signal to the first focus chip only during the non-exposure period, the focus motor is controlled to move during the non-exposure period. Certainly, in the manner 1, the second focus chip may also be used to drive the focus motor to move. This is not specifically limited in this application.

Manner 2: In a case that there is a focusing need, the electronic device stores a focus signal in the focus storage component (such as the second focus chip or the switch module). The focus signal is used to trigger focusing. In the non-exposure period, the focus motor is driven to move based on the focus signal stored in the focus storage component. During the exposure period, the focus motor is not driven to move.

In the manner 2, by storing the focus signal, and driving the focus motor to move based on the stored focus signal only during the non-exposure period, the focus motor is controlled to move during the non-exposure period.

The following separately describes the focusing method in embodiments of this application for the manner 1 and the manner 2.

Manner 1: In a case that there is a focusing need, transmit a focus signal to a first focus chip during a non-exposure period.

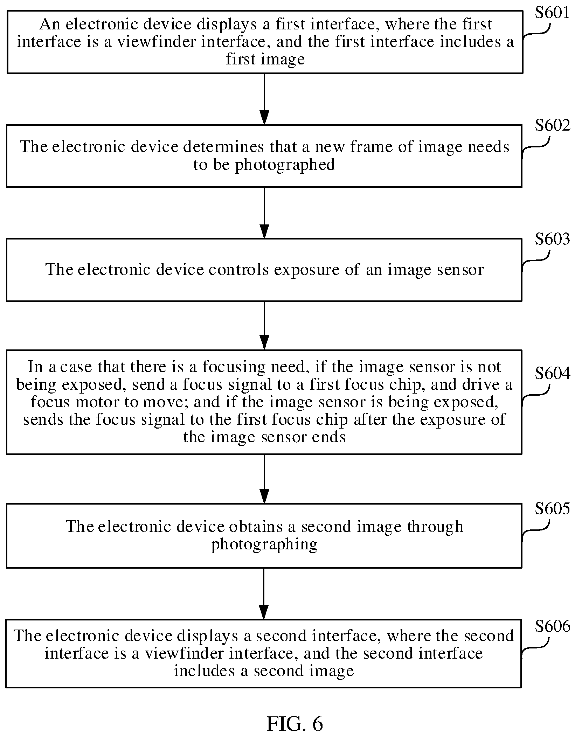

Refer to FIG. 6. By way of the manner 1, a focusing method provided in an embodiment of this application includes the following steps.

S601: An electronic device displays a first interface, where the first interface is a viewfinder interface, and the first interface includes a first image.

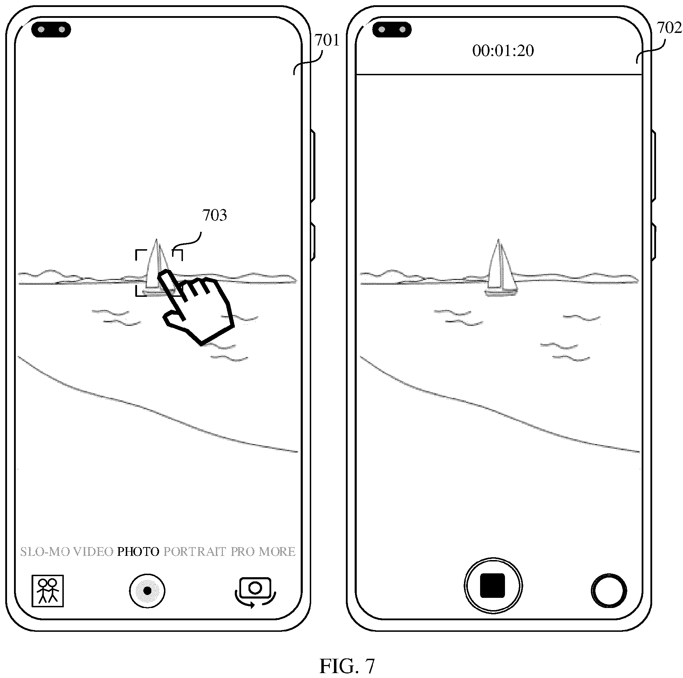

The first interface may be a viewfinder interface before photographing. For example, the first interface is a viewfinder interface 701 before photographing shown in FIG. 7. Alternatively, the first interface may be a viewfinder interface during photographing. For example, the first interface is a viewfinder interface 702 in photographing a video shown in FIG. 7.

S602: The electronic device determines that a new frame of image needs to be photographed.

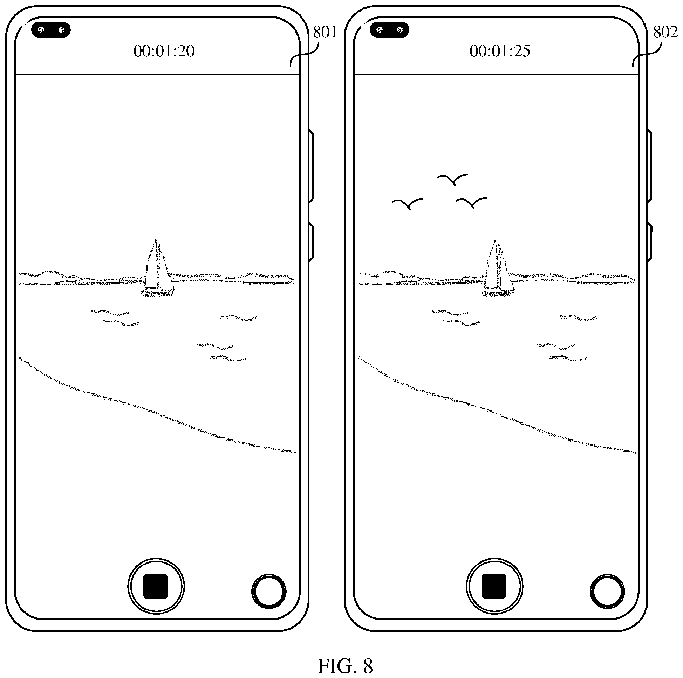

It should be understood that, during running of a camera application in the foreground, new image frames need to be continuously displayed on the viewfinder interface, so that a viewfinder picture can be updated in real time. For example, at 1 minute and 20 seconds of photographing a video, that is, "00:01:20", a mobile phone may display an interface 801 shown in FIG. 8. Subsequently, at 1 minute and 25 seconds of photographing the video, that is, "00:01:25", the mobile phone may display an interface 802 shown in FIG. 8. It is clear that the interface 802 is different from the interface 801. Compared with the interface 801, the interface 802 includes gulls flying over a sea surface.

Correspondingly, during running of the camera application in the foreground, new images need to be continuously obtained through photographing. Then, the electronic device may determine whether a new frame of image needs to be photographed based on whether the camera application is run in the foreground. After one frame of image (for example, the first image) is displayed, if the camera application continues to be run in the foreground, it is determined that a new frame of image needs to be photographed. If the camera application running in the foreground is exited, it is determined that a new frame of image does not need to be photographed.

After determining that a new frame of image needs to be photographed, the electronic device needs to photograph a new frame of image through the camera module. During photographing a new frame of image, the electronic device may further ensure, through automatic exposure, that an image with proper brightness is photographed, as shown in the following S603.

In addition, during an entire photographing process, that is, a process from opening the camera application to exiting running the camera application in the foreground, the electronic device may further trigger automatic focus based on a focusing need, to ensure that a clear image is obtained through photographing, as shown in the following S604.

S603: The electronic device controls exposure of an image sensor.

The image sensor may implement exposure in a manner of global shutter (global shutter) or rolling shutter (rolling shutter). By way of using the global shutter, it is meant that in a scanning process of converting an optical signal into an electrical signal, exposure of all rows starts at the same time, and the exposure ends at the same time. By way of using the rolling shutter, in a scanning process of converting an optical signal into an electrical signal, exposure starts from a first row, exposure is started only in a second row after a row period ends, and by analogy, exposure is started in an N^{th} row after N-1 rows.

S604: In a case that there is a focusing need, if the image sensor is not being exposed, send the focus signal to the first focus chip, and drive a focus motor to move; and if the image sensor is being exposed, sends the focus signal to the first focus chip after the exposure of the image sensor ends.

The focus signal is used to trigger focusing.

It should be understood that not every frame of image is photographed with a focusing need, that is, automatic focus is required. If it is determined that there is a focusing need, focusing needs to be further triggered.

For example, after determining that a new frame of image needs to be displayed, the electronic device (for example, an ISP in the electronic device) may determine, based on one or more frames of image that have been photographed, whether a position of a lens needs to be adjusted, that is, determine whether there is a focusing need. For example, after an image (for example, the first image) is photographed each time, the electronic device may determine, based on sharpness of the image, whether the position of the lens needs to be adjusted when a new frame of image is photographed. For example, if sharpness of the first image is higher than or equal to a sharpness threshold, when a new frame of image is photographed, the position of the lens may be kept unchanged when the first image is photographed. That is, there is no focusing need. If the sharpness of the first image is lower than the sharpness threshold, when a new frame of image is photographed, the position of the lens needs to be adjusted, and a distance between the lens and the image sensor is changed. That is, there is a focusing need.

For another example, if the electronic device detects a focus request of a user, for example, detects an operation in which the user taps on a position 703 on the viewing interface 701 shown in FIG. 7, the electronic device determines that the position of the lens needs to be adjusted, that is, determines that there is a focusing need.

For ease of description, an event indicating that there is a focusing need may be referred to as a first event. In other words, the first event may be that sharpness of a historically photographed image is lower than the sharpness threshold, or the first event may be that a focus request of the user is received.

However, because there is no mutual constraint between a time for determining a focusing need and a time for exposure of the image sensor, when the focusing need is determined, a state of the image sensor may have the following three cases.

Case 1: When a focusing need is determined, exposure of the image sensor has not started, that is, S603 has not been performed.

Case 2: When a focusing need is determined, the image sensor is being exposed, that is, S603 is being performed.

Case 3: When a focusing need is determined, exposure of the image sensor has ended, that is, performing of S603 has ended.

The case 1 and the case 3 are both cases in which the image sensor is not being exposed when the focusing need is determined. In this case, by way of S604, when the focusing need is determined, the image sensor is not being exposed. In this case, the focus signal may be sent to the first focus chip. After receiving the focus signal, the first focus chip drives the focus motor to move in a specific direction for a specific distance, to drive the lens to move for focusing. In this way, the focus signal may be transmitted to the first focus chip during the non-exposure period.

If in the case 2, it is a case that the image sensor is being exposed when the focusing need is determined. In this case, by way of S604, when the focusing need is determined, the image sensor is being exposed. In this case, the focus signal may not be sent to the first focus chip first, but the focus signal is sent to the first focus chip after the exposure ends (that is, performing of S603 has ended). After receiving the focus signal, the first focus chip drives the focus motor to move in a specific direction for a specific distance, to drive the lens to move. In this way, the focus signal is not transmitted to the first focus chip during an exposure period, but the focus signal is transmitted to the first focus chip during the non-exposure period.

It should be noted that, information such as the specific direction and the specific distance in which the focus motor moves may be determined by a Hall effect chip in the camera module or a 3A algorithm in the ISP. The specific direction includes a direction that is along an optical axis L and that is closer to the image sensor, or a direction that is along the optical axis L and that is away from the image sensor. For specific implementations of determining information such as the specific direction and the specific distance, refer to descriptions in the related art. Details are not described herein again.

S605: The electronic device obtains a second image through photographing.

The second image is a new frame of image.

For example, after exposure ends, the image sensor may transmit an electrical signal to the ISP, and then the ISP converts the electrical signal into a digital image signal, such as a standard image signal in an RGB, YUV, or another format, to obtain the second image through photographing.

S606: The electronic device displays a second interface, where the second interface includes a second viewfinder interface, and the second interface includes the second image.

The second interface may be a viewfinder interface before photographing or a viewfinder interface during photographing.

After the second image is obtained through photographing, the electronic device may display the second image, so that a viewfinder picture is updated.

Further, in S604, the electronic device may obtain, through a processor, an exposure state of the image sensor, and the exposure state includes both being exposed and not being exposed. In addition, when the exposure state is not being exposed, the processor sends the focus signal to the first focus chip based on a focus parameter, so that the focus signal is transmitted to the first focus chip only during the non-exposure period.

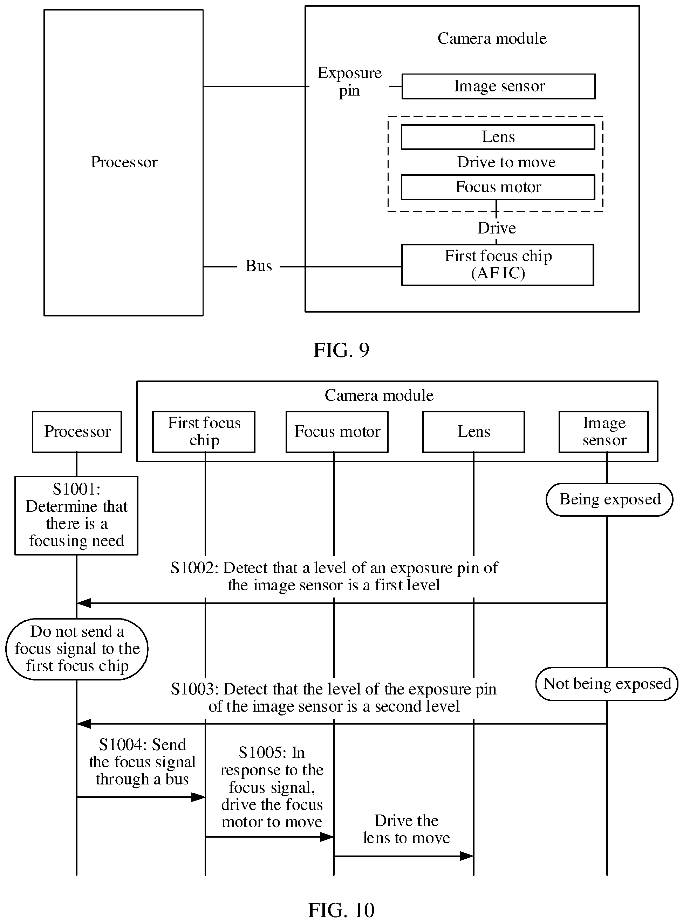

In a specific implementation, refer to FIG. 9. The processor is connected to an exposure pin of the image sensor, and the processor is connected to the first focus chip through a bus. The first focus chip may drive the focus motor to move. In this case, the movement of the focus motor drives the lens to move to implement focusing. When the image sensor is being exposed, the exposure pin is at a first level, for example, a high level. When the image sensor is not being exposed, the exposure pin is at a second level, for example, a low level.

In this implementation, refer to FIG. 10. S604 specifically includes the following steps.

S1001: The processor determines that there is a focusing need.

The processor may be an ISP (image processor), an AP (application processor), or the like.

In addition, if it is determined that there is a focusing need, it indicates that focusing needs to be triggered.

S1002: The processor detects that a level of the exposure pin of the image sensor is the first level.

The first level is a working level during exposure. In other words, if the level of the exposure pin is the first level, it indicates that the image sensor is being exposed. In this case, the processor does not need to send the focus signal to the first focus chip, so that the first focus chip does not receive the focus signal during the exposure period.

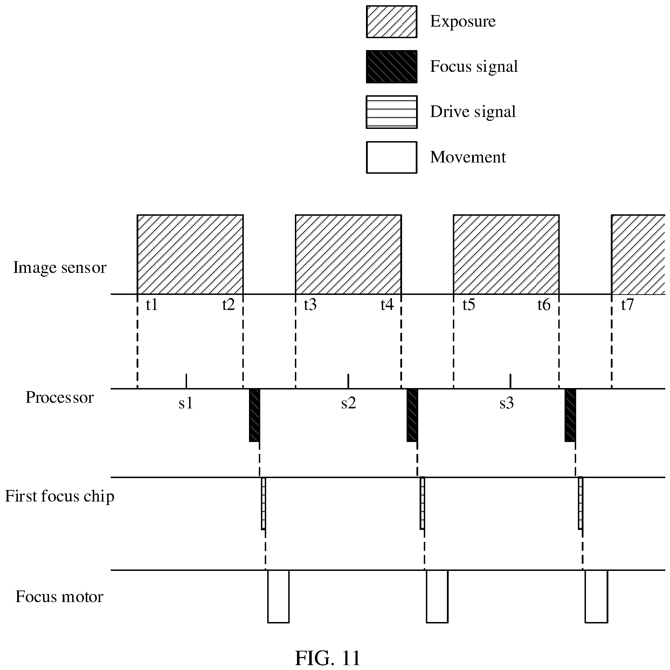

For example, t1-t2, t3-t4, and t5-t6 in FIG. 11 are all exposure periods, and moments s1, s2, and s3 in FIG. 11 are moments when it is determined that there is a focusing need. t1-t2 is used as an example. At the moment s1 between t1-t2, it is determined that there is a focusing need. In this case, because the image sensor is being exposed, the processor does not immediately send the focus signal to the first focus chip. Then, the first focus chip does not receive the focus signal and does not drive the focus motor to move.

S1003: The processor detects that the level of the exposure pin of the image sensor is the second level.

The second level is an idle level during the non-exposure period. In other words, if the level of the exposure pin is the second level, it indicates that the image sensor is not being exposed.

S1004: The processor sends the focus signal to the first focus chip through the bus.

That is, when the image sensor is not being exposed, the processor sends the focus signal to the first focus chip.

For example, in FIG. 11, t2-t3, t4-t5, and t6-t7 are all non-exposure periods. t2-t3 is used as an example. The processor determines that there is a focusing need at the moment s1 between t1-t2. Because t1-t2 is an exposure period, the processor detects, only after reaching t2, that the image sensor is not being exposed, and then the processor sends the focus signal to the first focus chip after entering t2-t3. Subsequently, the first focus chip receives the focus signal.

S1005: In response to the focus signal, the first focus chip drives the focus motor to move.

For example, still refer to FIG. 11. After receiving the focus signal sent by the processor each time, the first focus chip drives the focus motor to move. t2-t3 is used as an example. After receiving the focus signal, the first focus chip then sends a drive signal to the focus motor, to drive the focus motor to move.

When the focus motor moves, the lens is driven to move, so that the distance between the lens and the image sensor changes. For example, the focus motor drives the lens to move from the A position shown to the B position in FIG. 2, and the distance between the lens and the image sensor becomes shorter.

Manner: In a case that there is a focusing need, store a focus signal, and drive a motor to move based on the stored focus signal during a non-exposure period.

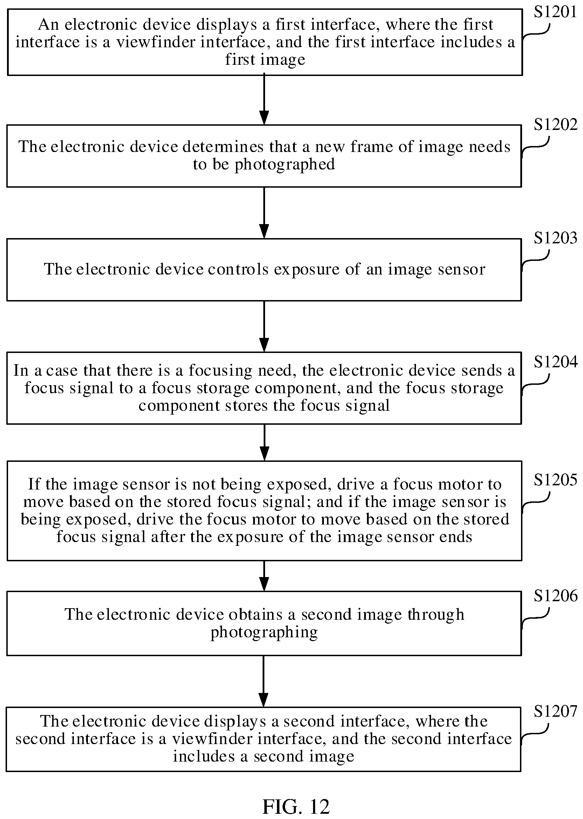

Refer to FIG. 12. By way of the manner 2, a focusing method provided in an embodiment of this application includes the following steps.

S1201: An electronic device displays a first interface, where the first interface is a photographing interface, and the first interface includes a first image. For details, refer to the foregoing descriptions of S601. Details are not described herein again.

S1202: The electronic device determines that a new frame of image needs to be photographed. For details, refer to the foregoing descriptions of S602. Details are not described herein again.

After determining that a new frame of image needs to be photographed, the electronic device needs to photograph a new frame of image through a camera module. During photographing a new frame of image, the electronic device may further ensure, through automatic exposure, that an image with proper brightness is photographed, as shown in the following S1203.

In addition, during an entire photographing process, that is, a process from opening a camera application to exiting running the camera application in the foreground, the electronic device may further trigger automatic focus based on a focusing need, to ensure that a clear image is obtained through photographing, as shown in the following S1204 and S1205.

S1203: The electronic device controls exposure of an image sensor. For details, refer to the foregoing descriptions of S603. Details are not described herein again.

S1204: In a case that there is a focusing need, the electronic device sends the focus signal to a focus storage component, and the focus storage component stores the focus signal.

The focus storage component is a component of the camera module, and the focus signal is used to trigger focusing.

In the manner 2, after it is determined that there is a focusing need, regardless of whether the image sensor is being exposed, the electronic device first sends the focus signal to the focus storage component, and the focus storage component stores the focus signal, so that the focus signal is used to drive the focus motor to move subsequently at an appropriate occasion (for example, during a period during which the image sensor is not being exposed).

S1205: If the image sensor is not being exposed, drive the focus motor to move based on the stored focus signal; and if the image sensor is being exposed, the focus motor is driven to move based on the stored focus signal after the exposure of the image sensor ends.

Similar to the foregoing S604, after the focus storage component stores the focus signal, a state of the image sensor may have the following three cases.

Case 1: After the focus storage component stores the focus signal, exposure of the image sensor has not started, that is, S1203 has not been performed.

Case 2: After the focus storage component stores the focus signal, the image sensor is being exposed, that is, S1203 is being performed.

Case 3: After the focus storage component stores the focus signal, exposure of the image sensor has ended, that is, performing of S1203 ended.

The case 1 and the case 3 are both cases in which the image sensor is not being exposed after the focus storage component stores the focus signal. In this case, by way of S1205, if the image sensor is not being exposed, the focus motor may be driven to move in a specific direction for a specific distance based on the stored focus signal, to drive the lens to move for focusing. In this way, during the non-exposure period, the focus motor can be driven to move based on the stored focus signal.

If in the case 2, it is a case that the image sensor is being exposed after the focus storage component stores the focus signal. In this case, by way of S1205, the image sensor is being exposed. In this case, the focus motor may not be driven to move based on the stored focus signal first. Instead, after the exposure ends (that is, after performing of S1203 has ended), the focus motor is driven to move in a specific direction for a specific distance based on the stored focus signal, to drive the lens to move. In this way, the focus motor is not driven to move during the exposure period. However, the focus motor is then driven to move during the non-exposure period.

Similarly, for specific implementations of determining information such as the specific direction and the specific distance, refer to descriptions in the related art. Details are not described herein again.

It can be learned that, by way of S1204 and S1205, the focus motor may be driven to move only during the non-exposure period.

In addition, in comparison with S604 in the manner 1, in the manner 2, after it is determined that there is a focusing need, the focus signal is sent to the focus storage component in the camera module, and then when the image sensor is not being exposed, the focus signal in the focus storage component is used to drive the focus motor to move. In this way, the step of sending the focus signal to the camera module after it is detected that the image sensor is not being exposed can be omitted, and the focus motor can be driven to move faster after it is detected that the image sensor is not being exposed, thereby reducing a delay. Therefore, this ensures that the focus motor is driven to move the lens during the non-exposure period.

S1206: The electronic device obtains a second image through photographing. For details, refer to the foregoing descriptions of S605. Details are not described herein again.

S1207: The electronic device displays a second interface, where the second interface is a viewfinder interface, and the second interface includes the second image. For details, refer to the foregoing descriptions of S606. Details are not described herein again.

Further, in S1205, the electronic device may obtain, through the focus storage component, an exposure state of the image sensor, and the exposure state includes both being exposed and not being exposed. In addition, when the exposure state is not being exposed, the focus storage component drives the focus motor to move based on the stored focus signal, so that the focus motor is driven to move during the non-exposure period.

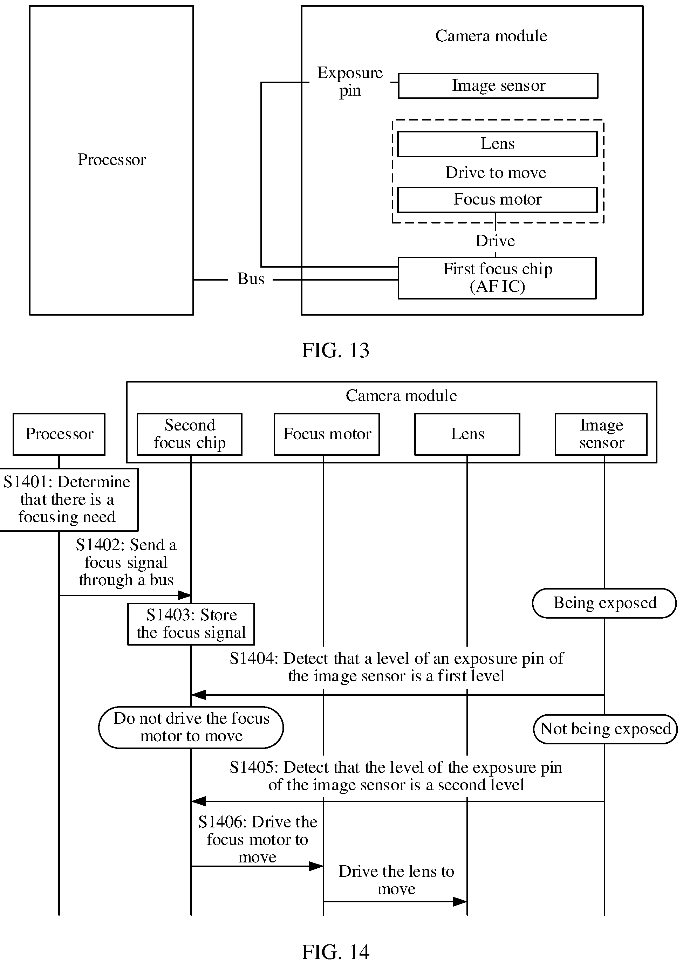

In a specific implementation, refer to FIG. 13. The focus storage component is a second focus chip. The second focus chip is connected to an exposure pin of the image sensor, and the second focus chip is further connected to a processor through a bus. The second focus chip may also drive the focus motor to move. In this case, the movement of the focus motor may drive the lens to move to implement focusing. When the image sensor is being exposed, the exposure pin is at a first level, and when the image sensor is not being exposed, the exposure pin is at a second level.

In this implementation, refer to FIG. 14. S1204 further includes the following steps.

S1401: The processor determines that there is a focusing need.

The processor may be an ISP (image processor), an AP (application processor), or the like.

S1402: The processor sends the focus signal to the second focus chip through a bus.

A difference from S1004 in the manner 1 is that in S1402, the processor send the focus signal to the second focus chip after determining that there is a focusing need regardless of whether the image sensor is being exposed.

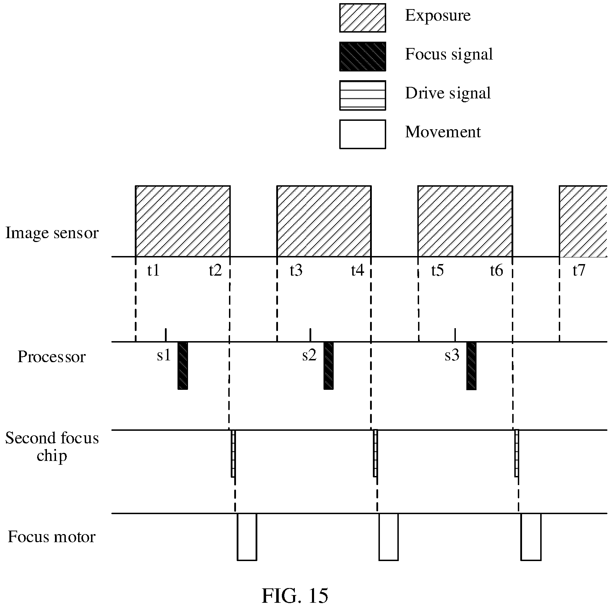

For example, both t1-t2 and t3-t4 in FIG. 15 are exposure periods, and moments s1, s2, and s3 in FIG. 15 are moments when it is determined that there is a focusing need. t1-t2 is used as an example. At the moment s1 between t1-t2, it is determined that there is a focusing need. In this case, even if the image sensor is being exposed, the processor sends the focus signal to the second focus chip. That is, during the exposure period, the focus signal may also be sent to the second focus chip.

S1403: The second focus chip stores the focus signal.

The stored focus signal may be used for subsequently driving the focus motor to move at an appropriate occasion (that is, during the non-exposure period).

Still refer to FIG. 14. S1205 further includes the following steps.

S1404: The second focus chip detects that a level of the exposure pin of the image sensor is the first level.

The first level is a working level during exposure. In other words, if the level of the exposure pin is the first level, it indicates that the image sensor is being exposed. In this case, the second focus chip does not need to drive the focus motor to move, so that the focus motor is not driven to move during the exposure period.

t1-t2 in FIG. 15 is still used as an example. The processor sends the focus signal to the second focus chip at the moment s1 between t1-t2. Then, the second focus chip completes storing the focus signal before t2. In this case, because the image sensor is being exposed, the second focus chip does not immediately drive the focus motor to move.

S1405: The second focus chip detects that the level of the exposure pin of the image sensor is the second level.

The second level is an idle level during the non-exposure period. In other words, if the level of the exposure pin is the second level, it indicates that the image sensor is not being exposed.

S1406: The second focus chip drives the focus motor to move based on the focus signal stored by the second focus chip.

That is, the focus motor is driven to move in a specific direction for a specific distance, so that during the non-exposure period, the focus motor is driven to move based on the stored focus signal.

For example, in FIG. 15, t2-t3, t4-t5, and t6-t7 are all non-exposure periods. t2-t3 is used as an example. The second focus chip receives and stores the focus signal between t1-t2. Because t1-t2 is an exposure period, the second focus chip detects, only after reaching t2, that the image sensor is not being exposed. In this case, the second focus chip sends a drive signal to the focus motor after entering t2-t3, thereby driving the focus motor to move.

In addition, in comparison with S1004 and S1005 in the manner 1, in this implementation, after it is determined that there is a focusing need, the processor sends the focus signal to the second focus chip, and then when the image sensor is not being exposed, the second focus chip drives the focus motor to move, without sending the focus signal to the second focus chip when it is detected that the image sensor is not being exposed. In this way, the focus motor can be driven to move faster after it is detected that the image sensor is not being exposed, thereby reducing a delay. Therefore, this ensures that the focus motor is driven to move the lens during the non-exposure period.

When the focus motor moves, the lens is driven to move, so that a distance between the lens and the image sensor changes.

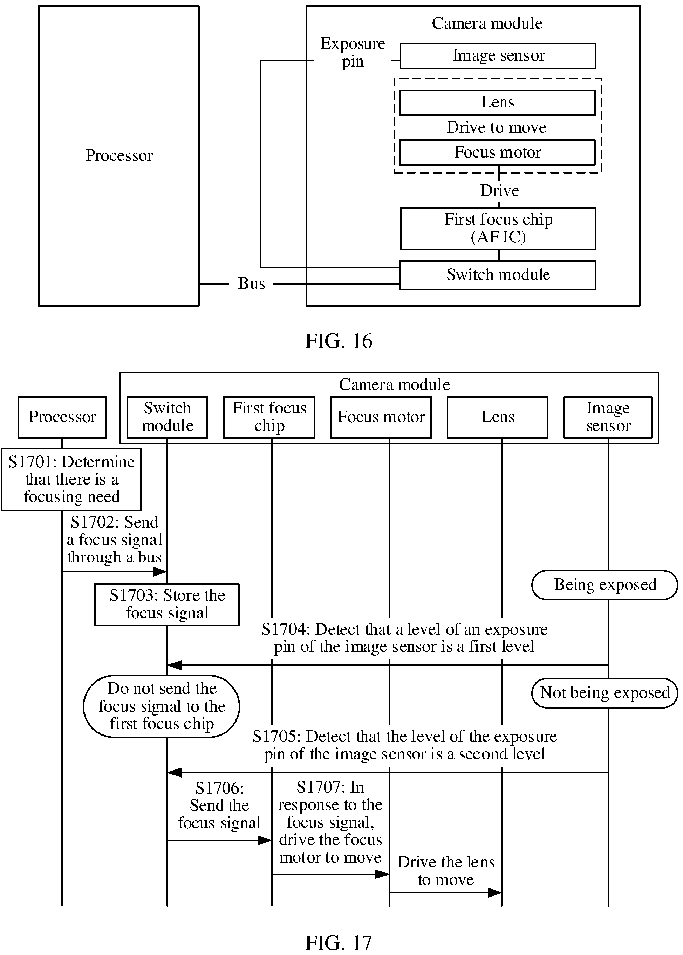

In another specific implementation, refer to FIG. 16. A switch module is added to a first focus chip, and the focus storage component is the switch module. The switch module is connected to the exposure pin of the image sensor, and the switch module is further connected to the processor and the first focus chip through buses. The switch module may control the first focus chip to drive the focus motor to move. In this case, the movement of the focus motor may drive the lens to move to implement focusing. When the image sensor is being exposed, the exposure pin is at the first level, and when the image sensor is not being exposed, the exposure pin is at the second level.

In this implementation, refer to FIG. 17. S1204 further includes the following steps.

S1701: The processor determines that there is a focusing need.

The processor may be an ISP (image processor), an AP (application processor), or the like.

S1702: The processor sends a focus signal to the switch module through the bus.

A difference from S1004 in the manner 1 is that in S1702, the processor sends the focus signal to the switch module after determining that there is a focusing need regardless of whether the image sensor is being exposed.

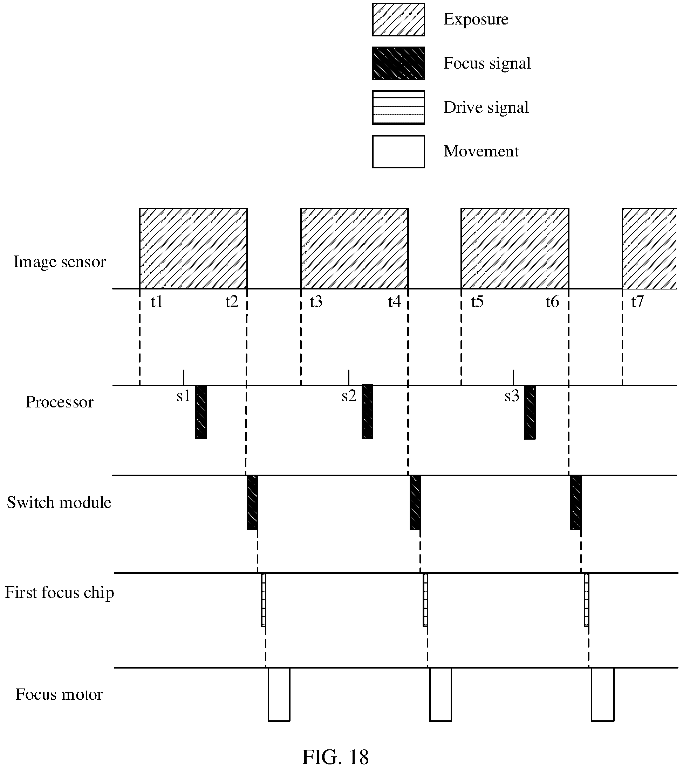

For example, both t1-t2 and t3-t4 in FIG. 18 are exposure periods, and moments s1, s2, and s3 in FIG. 18 are moments when it is determined that there is a focusing need. t1-t2 is used as an example. At the moment s1 between t1-t2, it is determined that there is a focusing need. In this case, even if the image sensor is being exposed, the processor sends the focus signal to the switch module. That is, during the exposure period, the focus signal may also be sent to the switch module.

S1703: The switch module stores the focus signal.

The stored focus signal may be used for subsequently driving the focus motor to move at an appropriate occasion (that is, during the non-exposure period).

Still refer to FIG. 17. S1205 further includes the following steps.

S1704: The switch module detects that the level of the exposure pin of the image sensor is the first level.

The first level is a working level during exposure. In other words, if the level of the exposure pin is the first level, it indicates that the image sensor is being exposed. In this case, the switch module does not need to send the focus signal to the first focus chip. In this case, the first focus chip does not drive the focus motor to move, so that the focus motor is not driven to move during the exposure period.

t1-t2 in FIG. 18 is still used as an example. The processor sends the focus signal to the switch module at the moment s1 between t1-t2. Then, the switch module completes storing the focus signal before t2. In this case, because the image sensor is being exposed, the switch module does not immediately forward the focus signal to the first focus chip, and the first focus chip does not drive the focus motor to move.

S1705: The switch module detects that the level of the exposure pin of the image sensor is the second level.

The second level is an idle level during the non-exposure period. In other words, if the level of the exposure pin is the second level, it indicates that the image sensor is not being exposed.

S1706: The switch module send the focus signal to the first focus chip.

That is, during the non-exposure period, the focus signal is sent to the first focus chip.

For example, in FIG. 18, t2-t3, t4-t5, and t6-t7 are all non-exposure periods. t2-t3 is still used as an example. The switch module receives and stores the focus signal between t1-t2. Because t1-t2 is an exposure period, the switch module detects, only after reaching t2, that the image sensor is not being exposed, and the switch module sends the focus signal to the first focus chip after entering t2-t3.

S1707: In response to the focus signal, the first focus chip drives the focus motor to move based on the focus signal.

For example, still refer to FIG. 18. After receiving the focus signal sent by the switch module each time, the first focus chip drives the focus motor to move. t2-t3 is used as an example. After receiving the focus signal, the first focus chip then sends a drive signal to the focus motor, to drive the focus motor to move.

In addition, in comparison with S1004 and S1005 in the manner 1, in this implementation, after it is determined that there is a focusing need, the processor sends the focus signal to the switch module, and then when the image sensor is not being exposed, the switch module sends the focus signal to the first focus chip, to drive the focus motor to move, without sending the focus signal to the switch module when it is detected that the image sensor is not being exposed. In this way, the focus motor can be driven to move faster after it is detected that the image sensor is not being exposed, thereby reducing a delay. Therefore, this ensures that the focus motor is driven to move the lens during the non-exposure period.

When the focus motor moves, the lens is driven to move, so that the distance between the lens and the image sensor changes.

An embodiment of this application further provides an electronic device. The electronic device may include: a memory and one or more processors. The memory is coupled to the processor. The memory is configured to store computer program code, and the computer program code includes computer instructions. When the processor executes the computer instructions, the electronic device may perform the functions or steps in the foregoing method embodiments to implement photographing.

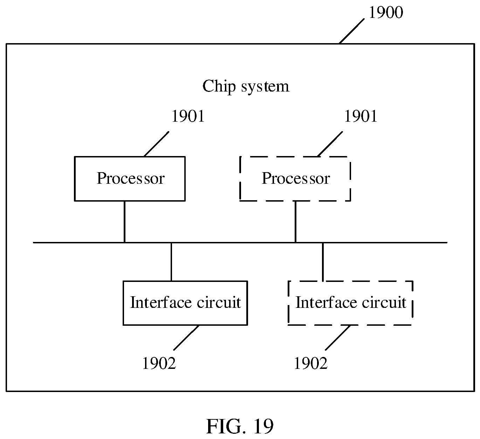

An embodiment of this application further provides a chip system. As shown in FIG. 19, the chip system 1900 includes at least one processor 1901 and at least one interface circuit 1902. The processor 1901 and the interface circuit 1902 may be interconnected through a line. For example, the interface circuit 1902 may be configured to receive a signal from another apparatus (such as a memory of an electronic device). For another example, the interface circuit 1902 may be configured to send a signal to another apparatus (for example, the processor 1901). For example, the interface circuit 1902 may read an instruction stored in the memory, and send the instruction to the processor 1901. When the instruction is executed by the processor 1901, the electronic device is enabled to perform the steps in the foregoing embodiments. Certainly, the chip system may further include another discrete component. This is not specifically limited in this embodiment of this application.

An embodiment of this application further provides a computer-readable storage medium. The computer-readable storage medium includes computer instructions, and when the computer instructions are run on an electronic device, the electronic device is enabled to perform the functions or steps in the foregoing method embodiments to implement photographing.

An embodiment of this application further provides a computer program product. When the computer program product runs on a computer, the computer is enabled to perform the functions or steps in the foregoing method embodiments to implement photographing.

In addition, an embodiment of this application further provides an apparatus. The apparatus may be specifically a chip, a component, or a module. The apparatus may include a processor and a memory that are connected. The memory is configured to store a computer-executable instruction. When the apparatus runs, the processor may execute the computer-executable instruction stored in the memory, to enable the chip to perform the functions or steps in the foregoing method embodiments to implement photographing.

The electronic device, the communication system, the computer-readable storage medium, the computer program product, or the chip provided in embodiments may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented as required, that is, an inner structure of an apparatus is divided into different functional modules to implement all or part of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected based on actual needs to achieve the objectives of the solutions of embodiments.

In addition, functional units in embodiments of this application may be integrated into one processing unit, or each of the units may be physically separated, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

## Claims

1. A focusing method, applied to an electronic device, wherein the electronic device comprises a lens, an image sensor, and a motor, and the method comprises:
driving the motor to move in response to a first event if it is determined that the image sensor is not being exposed, wherein the first event is used to indicate focusing, to change a distance between the lens and the image sensor for focusing; and
driving the motor to move after the exposure of the image sensor ends in response to the first event if it is determined that the image sensor is being exposed, to change the distance between the lens and the image sensor for focusing.

2. The method according to claim 1, wherein the first event comprises that sharpness of a photographed image is lower than a sharpness threshold, or the first event comprises that a focus request of a user is received.

3. The method according to claim 1 or 2, wherein if a level of a first pin of the image sensor is a first level, determining that the image sensor is being exposed; and if the level of the first pin of the image sensor is a second level, determining that the image sensor is not being exposed.

4. The method according to claim 3, wherein the electronic device further comprises a processor and a first focus chip, the first focus chip is configured to drive the motor to move, the processor is connected to the first focus chip, and the processor is connected to the first pin of the image sensor;
the driving the motor to move if it is determined that the image sensor is not being exposed comprises:
if the processor detects that the level of the first pin is the second level, sending, by the processor, a focus signal to the first focus chip, wherein the focus signal is used to trigger focusing; and
in response to the focus signal, driving, by the first focus chip, the motor to move; and
the driving the motor to move after the exposure of the image sensor ends if it is determined that the image sensor is being exposed comprises:
if the processor detects that the level of the first pin is the first level, after the processor detects that the level of the first pin changes to the second level, driving the motor to move.

5. The method according to claim 3, wherein the electronic device further comprises a processor and a second focus chip, the second focus chip is configured to store a focus signal and drive the motor to move, the focus signal is used to trigger focusing, the second focus chip is connected to the motor and the processor, and the second focus chip is connected to the first pin of the image sensor;
the driving the motor to move in response to a first event if it is determined that the image sensor is not being exposed, and driving the motor to move after the exposure of the image sensor ends in response to the first event if it is determined that the image sensor is being exposed comprises:
in response to the first event, sending, by the processor, the focus signal to the second focus chip;
storing, by the second focus chip, the focus signal;
if the second focus chip detects that the level of the first pin is the second level, driving, by the second focus chip based on the stored focus signal, the motor to move; and
if the second focus chip detects that the level of the first pin is the first level, after detecting that the level of the first pin changes to the second level, driving, by the second focus chip, the motor to move.

6. The method according to claim 3, wherein the electronic device further comprises a processor, a first focus chip, and a switch module, the switch module is configured to store a focus signal and control transmission of the focus signal, the focus signal is used to trigger focusing, the first focus chip is configured to drive the motor to move, the switch module is connected to the first focus chip and the processor, and the switch module is connected to the first pin of the image sensor; and
the driving the motor to move in response to a first event if it is determined that the image sensor is not being exposed, and driving the motor to move after the exposure of the image sensor ends in response to the first event if it is determined that the image sensor is being exposed comprises:
in response to the first event, sending, by the processor, the focus signal to the switch module;
storing, by the switch module, the focus signal;
if the switch module detects that the level of the first pin is the second level, sending, by the switch module, the focus signal stored by the switch module to the first focus chip;
if the switch module detects that the level of the first pin is the first level, after detecting that the level of the first pin changes to the second level, sending, by the switch module, the focus signal stored by the switch module to the first focus chip; and
in response to the focus signal, driving, by the first focus chip, the motor to move.

7. The method according to any one of claims 4 to 6, wherein the driving the motor to move comprises:
driving the motor to move in a first direction, wherein
the first direction is a direction that is along an optical axis of the lens and close to the image sensor; or the first direction is a direction that is along an optical axis of the lens and away from the image sensor.

8. An electronic device, wherein the electronic device comprises a lens, an image sensor, a motor, a processor, and a memory, the lens is configured to transmit light of a photographed object to the image sensor, the image sensor is configured to convert a light signal corresponding to the light into an electrical signal for exposure, the motor is configured to drive the lens to move for focusing, and the memory stores computer instructions; and
when the processor executes the computer instructions, the electronic device is enabled to perform the method according to any one of claims 1 to 7.

9. A computer-readable storage medium, comprising computer instructions, wherein when the computer instructions are run on an electronic device, the electronic device is enabled to perform the method according to any one of claims 1 to 7.

10. A chip system, wherein the chip system comprises an interface circuit and a processor; the interface circuit and the processor are interconnected through a line; the interface circuit is configured to: receive a signal from a memory, and send the signal to the processor; the signal comprises computer instructions stored in the memory; and when the processor executes the computer instructions, the chip system performs the method according to any one of claims 1 to 7.
